# EUROPEAN PATENT SPECIFICATION

(11) **EP 0 604 639 B1**
(45) Date of publication and mention of the grant of the patent: **26.08.1998**
(21) Application number: 93916667.4
(22) Date of filing: 22.06.1993
(51) Int. Cl.: H04H 9/00

(54) **APPARATUS AND METHOD FOR IDENTIFYING BROADCAST PROGRAMS AND ACCESSING INFORMATION RELATING THERETO**
Vorrichtung und Verfahren zur Identifikation von Rundfunkprogrammen und Zugriff auf diesbezügliche Daten
APPAREIL ET PROCEDE PERMETTANT D'IDENTIFIER DES EMISSIONS RADIODIFFUSEES ET D'ACCEDER A DES INFORMATIONS LES CONCERNANT

(30) Priority: 22.06.1992 US 901735
(43) Date of publication of application: 06.07.1994
(73) Proprietor: MANKOVITZ, Roy J., Encino, CA 91316 (US)
(72) Inventor: MANKOVITZ, Roy J., Encino, CA 91316 (US)
(74) Representative: Ninnemann, Detlef, Dipl.-Ing.
(86) International application number: US9305939
(87) International publication number: WO9400842

(56) References cited:
- WO-A-91/11062
- US-A- 4 887 308
- US-A- 5 063 610
- US-A- 5 119 507
- US-A- 5 155 762
- US-A- 5 162 905
- US-E- R E17 023

## Description

### Field of the Invention

The invention relates in general to broadcast media which includes radio and television and to print media (magazines, newspapers, etc.) and, in particular, to identifying selections from such media so that auxiliary information relating to these selections can be accessed.

### Background of the Invention

The media have experienced the following problems for a long time:

(A). A listener of radio may hear a song of interest and decides to buy it, but does not know the title or artist. Frequently the announcer of the radio station does not state the title, artist or other information of the song, or even if the information was announced, it was before the song played. The listener must wait until the song is heard again and hope that the title and artist are announced after the song. Even when the information of the song are announced and heard, there are situations where such information cannot easily be retained (such as when a listener is operating an automobile or simply when a listener does not have something to write on or write with).

The problem is especially true for commercials, for which the listeners usually must memorize information that are difficult to memorize, such as telephone numbers and addresses for ordering the products advertized. If listeners fail to remember these items of information, the effects of the commercials are diminished.

Similarly, a viewer of television may be scanning through different channels and start watching a program that is already in progress. After a few minutes, the viewer may decide to view the show the next time it is on, because the viewer wants to see it in its entirety or the viewer may be watching something else. Therefore, the viewer must physically search through the current and subsequent TV program listings until the next showing of the program is found. This is time consuming and if several months pass, the viewer may forget the name of the show.

Despite the above described long-felt inconvenience to so many in the audience, no satisfactory solution has so far been found.

(B). An alternative channel is needed to provide additional information for a commercial. For example, an advertizer may only be able to finance a half-minute prime time commercial. If a less expensive alternative channel is available for providing additional information (e.g. price quotes, store hours, details of a product, etc.) to listeners, the advertizer can then have more flexibility to fashion a commercial, such as by spending the whole half minute on features that may attract the listeners or putting the commercial on for only a few days, and let the listeners access other information from the less expensive alternative channel.

The same alternative channel is also needed for newspapers and magazine advertisements which have a limited lifetime. For example, the Sunday paper real estate section typically lists homes which may only be available for viewing on that day. If a second channel of information is available, then information about the home can still be available to the readers even when the advertisement is taken off.

Despite the above identified economic benefits, a satisfactory and less expensive alternative channel of communication has yet to be found. Prior art systems in this regard all require a station to broadcast the information in a secondary signal, concurrently with the broadcasting of the main program, and the listeners must be equipped with special decoder circuits for recovering the information.

For example, the European radio broadcast systems (RDS) broadcast the identification of a program in the SCA hand and require the listeners to have special receivers to decode and display this identification.

US-A-4 887 308 discloses an information storage and retrieval system having a primary information storage for broadcast information that is selected and encoded for constant broadcast transmission. The broadcast information includes not only the normal broadcast data such as a musical composition itself but also coded information containing the title, composer, artist data and the like. A receiver is employed to receive the broadcast transmissions and decode the information for presentation on a visual display. A broadcast data hold and recall manual buttons are employed to store desired data in a memory and to subsequently recall such data at the command of the listener.

While it is known from US-A-4 887 308 to store at a receiver auxiliary information about a broadcast program and to later retrieve the stored auxiliary information, both at the listener's convenience, special decoder means are necessary for recovering the auxiliary information from the broadcast signal. Also, the auxiliary information has to be stored at each individual receiver.

There is also a proposal to transmit identification of a television program during the vertical blanking interval (VBI) period. Unfortunately, special decoders are also needed under such method.

And in the I PLUS system, described in patent document WO-A-93 12612 auxiliary information relating to a broadcast program or printed material is retrieved using a code number referred to as an I PLUS number which is broadcast or printed along with the program or print material. The code number is used for delayed recording from a television or a radio of a broadcast program containing the auxiliary information. However, the I PLUS system does not retrieve information until the next day, and it requires a television and VCR for such retrieval.

(C). Advertising rates for commercials of television programs are determined by the expected size of viewer audience for a predetermined number of television programs. These expectations are usually determined by the estimated audience sizes of previously broadcast shows. For example, for a weekly television series, the estimate of audience size for upcoming episodes is based on the estimated size of previously broadcast shows. In addition, advertising rates may be adjusted based on an "after the fact" estimation of the market share for the televised program.

The present systems for estimating market share involve survey evidence such as the Nielsen ratings. Previous market data was taken by selecting households to record their viewing habits. For example, a selected household might record in a written journal or diary when the television is turned on and turned off, what channels are selected and the number of viewers in the room. This data may alternatively be collected by providing the user with an electronic device having a button that indicates turning on or off the television and the channel selected. Other systems are connected directly to the television that will monitor power on and off and the channel and time of the selected programs. The system is wired to a dedicated telephone line. When instructed, the electronics dump their memory over the phone line to a central computer for analysis. Each of these systems requires selecting individual households that represent an adequate sample of the general viewing audience and requires physically setting up the monitoring apparatus. These systems are inaccurate because the sample size is small, diary entries may be erroneous, or require viewer action.

WO-A-91 11062 discloses a method for broadcast media audience measurement. The method includes scanning and sampling each broadcast frequency within a predetermined band and outputting sampled audio frequency signals, "listening" with a microphone to sound emanating from a monitored broadcast receiver and comparing the scanned audio signals to the audio output developed by the microphone and indicating a match. The matching station and the date and time of the match are recorded and the stored information transmitted to a remote location via suitable communication media.

It is the object of this invention to provide an effective method for supplying auxiliary information about broadcast programs to a user of a receiving unit which comprises at least a broadcast receiver. It is another object to overcome the limitations of the prior art, in particular the limitations of the system disclosed in US-A-4 887 308.

### Summary of the Invention

The invention relates to a method for supplying auxiliary information about broadcast programs to a user of a receiving unit comprising at least a broadcast receiver. The method comprises the steps of playing programs from a schedule of broadcast programs at the broadcast receiver, mapping SDT data representative of the station, day, and time of the respective programs of the schedule to auxiliary information about the respective programs in a memory at a central locationremote from the receiver, storing at the receiving unit SDT data for a particular program selected by the user from among the programs being played at the receiver, conveying the stored SDT data at the user's initiative to the central location, retrieving at the central location the auxiliary information corresponding to the conveyed SDT data, and conveying the retrieved auxiliary information to the user.

### Brief Description of the Drawings

The foregoing features of the present invention would be better understood upon consideration of the following detailed description of certain preferred embodiments taken in conjunction with the accompanying drawings in which:

Fig. 1 is a drawing of a radio/recorder unit used in connection with the present invention.

Fig. 2 shows an internal design of the radio/recorder unit of Fig. 1.

Figs. 3a-3c is a flow chart illustrating the steps performed by the CPU of the unit in Fig. 2 in response to actuation of keys on the unit 100 shown in Fig. 1.

Figs. 4a-4d show different menus displayed on the radio/recorder unit of Fig. 1 during setup.

Fig. 5 is a flow chart illustrating the steps performed by a program information retrieval system to send information to the user.

Fig. 6 is a schematic block diagram of a receiver used in connection with another implementation of this invention for identifying a broadcast program.

Fig. 7 is a schematic block diagram illustrating a design of an automatic information machine (AIM) wherein information on broadcast programs can be retrieved.

Fig. 8 is a diagram of another unit used in connection with the present invention.

Fig. 9 is a schematic block diagram illustrating an internal design of the embodiment shown in Fig. 8.

### Description of the Preferred Embodiments

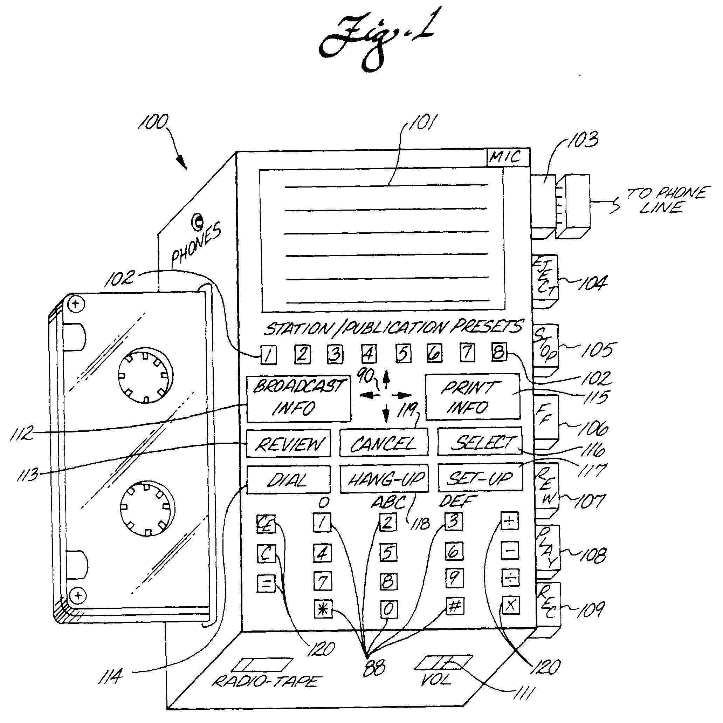

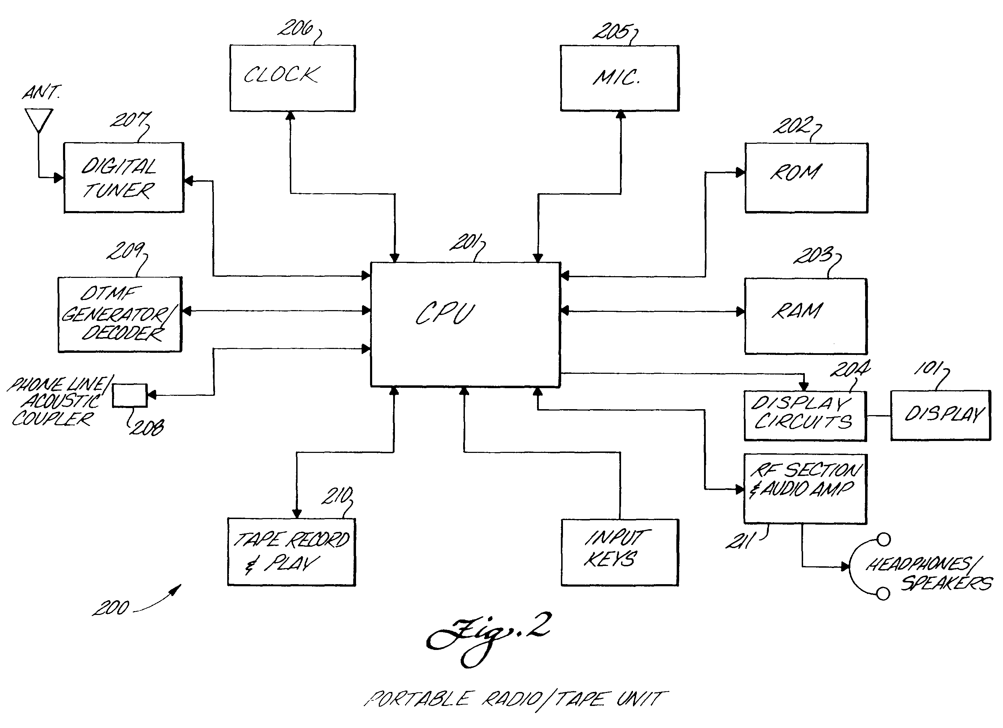

Fig. 1 illustrates a portable radio/recorder unit 100. The unit 100 has a conventional radio and a tape recorder. The radio has a tuner for receiving broadcast signals from different radio stations, including amplitude modulation (AM) stations and frequency modulation (FM) stations. As an option, television audio reception is added to the FM tuner so that the unit 100 can receive audio signals from television (TV) stations. (Hereinafter, a "station" may also be referred to as a "channel").

Like many of today's units, unit 100 has a circuit for providing a time-of-day clock in hour, minute and second. Preferably, the clock further measures day, as well as month and year. The time measure of the clock is displayed on a display 101.

Like many conventional units, the unit 100 is equipped with a plurality of station presets. The station presets allow a user to selectively store certain stations into a memory so that the unit 100 can be tuned to any one of the preset stations by simply touching a Station/Publication Preset key 102.

The unit 100 has a circuit for generating dual tone multiple frequency (DTMF) signals so that it can send messages through a telephone. A jack 103 for receiving a telephone plug is provided.

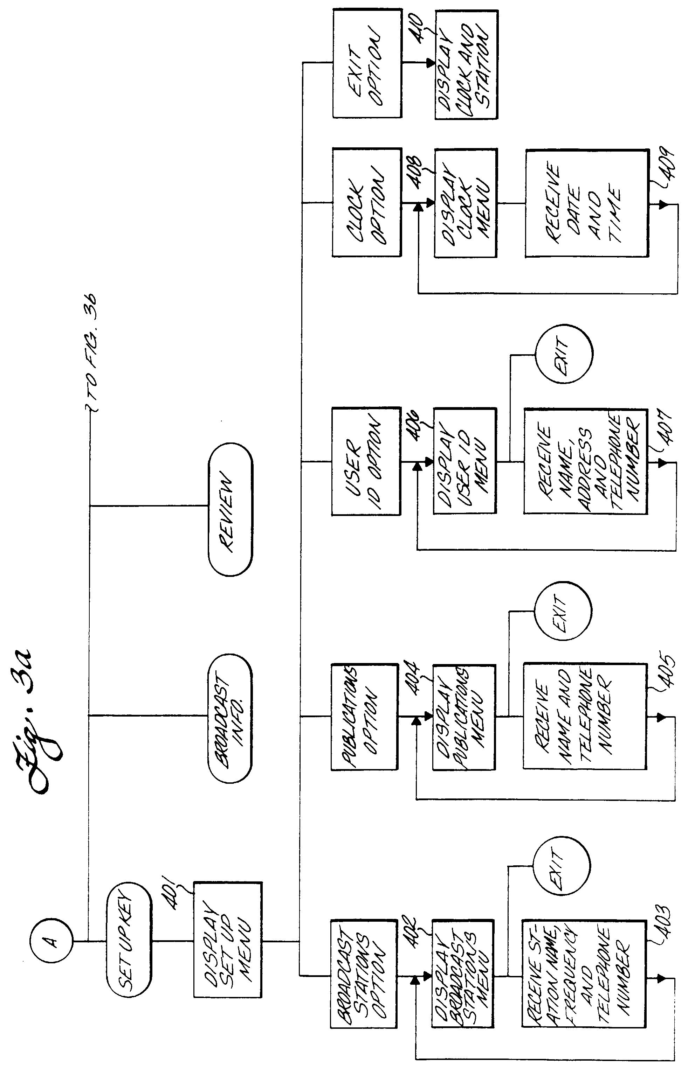

As will be described in reference to Fig. 2, a random access memory (RAM) is provided to store a plurality of telephone numbers, one corresponding to each of the station presets.

The display 101 is preferably one with low power consumption such as a liquid crystal display (LCD). It is normally used to display the frequency of the tuned station and/or the time of day.

The unit 100 also has a conventional magnetic tape recorder PLAYER. As in many standard recorders, a set of keys, including the EJECT 104. STOP 105, FF (fast forward) 106, REW (rewind) 107, PLAY 108 and REC (record) 109 keys are provided. And as in many conventional units, the unit 100 also has a radio-recorder key 110 to allow a user to select either the radio or the recorder, as well as a VOL control 111 to allow a user to change the volume output.

The unit 100 has a set of telephone keys 88-1 through 88-12 to provide a twelve-button key pad similar to that of a conventional telephone. In particular, the telephone keys 88-1 through 88-12 are the number keys "1" through "0", the star "*" key and the pound sign "#" key respectively. The letters of the alphabet are assigned to the telephone keys "2" through "9" as they are for a conventional telephone. For example, the letters ABC are assigned to the telephone key "2". However, unlike the conventional telephone key pad, the letters Q and Z are assigned to the telephone keys "1" and "0" respectively.

Alphabet characters are entered by a double key entry which is well-known to those skilled in the art. Each character is represented by two numbers. For example, the telephone key "2" corresponds to the letters ABC. However, pressing the key "2" once does not uniquely select one of the three letters. By pressing the "1" key, after pressing the "2" key, the first character or "A" is entered. Similarly, if "B" is being selected, the user presses the telephone key "2" and then again presses the telephone key "2" to select the second character "B". Other characters are similarly entered.

Alternatively, a standard qwerty keyboard such as used for typewriters or computers may be used.

A set of cursor keys 90 is provided to let a user moves a cursor on the display 101. The cursor keys 90 include a left arrow key for moving the cursor to the left, an up arrow key for moving the cursor upward, a down arrow key for moving the cursor downward and a right arrow key for moving the cursor to the right.

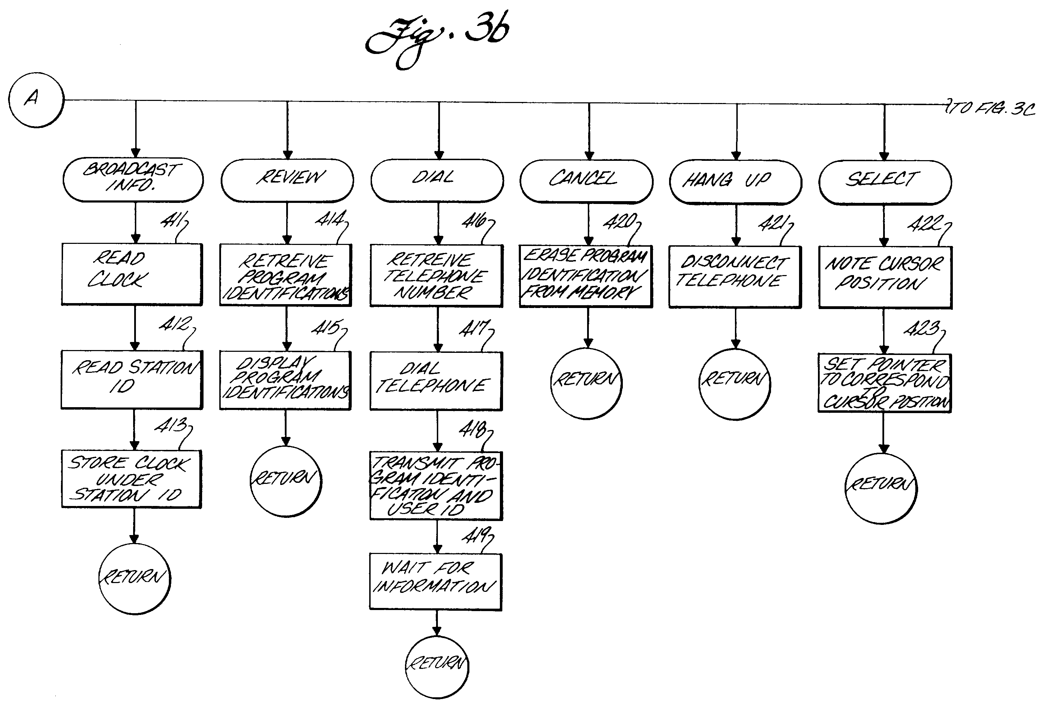

Beside the above described keys, the unit 100 also has a set of keys, including a BROADCAST INFO key 112, a DIAL key 114, a REVIEW key 113, a CANCEL key 118, a HANG UP key 119, a PRINT INFO key 115, a SELECT key 116 and a SETUP key 117. The functions of these keys will be described below along with reference to the flow charts of Figs. 3a-3b.

Fig. 2 is a schematic block diagram of an internal design of the unit 100. Operation of the unit 100 is controlled by a central processing unit (CPU) 201. The CPU 201 can be any one of the many off-the-shelf microprocessors on the market. such as a 8080 microprocessor manufactured by Intel® Corporation, or a custom-made chip. It is coupled to a read only memory (ROM) 202 which stores operation software for operating the CPU 201.

The CPU 201 is connected to a random access memory (RAM) 203. The RAM 203 is used for storing the station presets and program identifications. It is also used for providing a scratch pad for the CPU 201 in performing other functions such as in operating the display 101. Since it is contemplated that the unit 100 is portable, at least a portion of the RAM 203 is therefore implemented with non-volatile memory, such as a electrically erasable programmable read only memory (EEPROM) or a volatile memory with a battery backup, so that reusable data can be stored.

The CPU 201 is coupled to a display control circuit 204 which controls the display 101, a clock circuit 206 which controls the clock. The digital tuner of the unit 100 is controlled by the CPU 201 through a digital tuner circuit 207, and the tape recorder of the unit 100 is controlled by the CPU 201 through a tape recorder control circuit 210. Designs for these circuits are known to a person skilled in the art, therefore, detail explanation thereof is deemed unnecessary.

Optionally, CPU 201 is also connected to a radio frequency section and audio amplifier, to which a head phone or a speaker can be connected.

The unit 100 has a microphone which is controlled by the CPU 201 through a conventional microphone interface 205. The CPU 201 also has control of a telephone and acoustic coupler 208 through a circuit 208, and a DTMF generator and decoder through a DTMF circuit 209. The circuit 208 can be connected directly to telephone jack 103, or optionally to an acoustic coupler located on the rear surface of the unit 100. These devices are used for connecting to a remote program information retrieval system (PIRS) and for receiving from the PIRS auxiliary information on a broadcast program. Each of the circuits 208 and 209 can use one of the designs available in the art. Although all three devices are shown in Fig. 2, not all of them are needed.

The CPU 201 controls and receives the plurality of enhancement keys shown on Fig. 1, specifically the BROADCAST INFO key 112, the DIAL key 114, the REVIEW key 113, the CANCEL key 118, the HANG UP key 119, the PRINT INFO key 115, the SELECT key 116 and the SETUP key 117.

In addition to its function as a regular radio or a recorder PLAYER, unit 100 also operates to provide instantaneous identification and registration of broadcast programs of interest to a user. These functions are now described with reference to the flow charts of Figs. 3a-3b.

When powered up, preferably by batteries (not shown), the unit 100 operates as a standard radio to or a standard recorder, depending on the setting of the radio-tape key 110. An identification of the tuned station and the time-of-day clock may be shown on the display 101.

When any one of the enhancement keys is actuated, the CPU 201 is interrupted and a corresponding interrupt subroutine is executed.

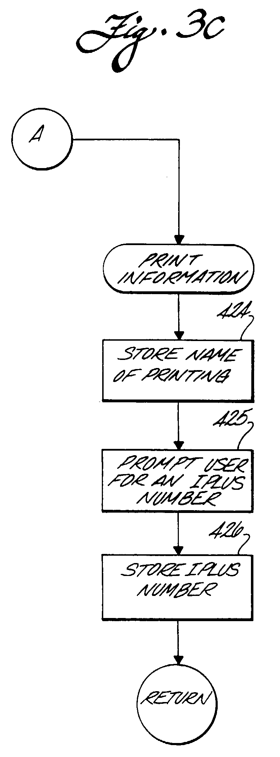

When the SETUP key 117 is activated, step 401 is performed in which a setup menu similar to that illustrated in Fig. 4a is put on the display 101. The setup menu allows a user the options of: (1) setting the preset keys 102 to preferred stations by selecting the "BROADCAST STATIONS" option, (2) setting the preset keys to preferred publications by selecting the "PUBLICATIONS" option, (3) setting a user identification by selecting the "USER ID" option and (4) setting the clock 206 by selecting the "CLOCK" option. A user can select any one of these options by using the cursor keys 90 to move the cursor to a desired option and then pressing the SELECT KEY 116. When the SELECT KEY 116 is pressed, the position of the cursor (step 422) is noted and this position is used to set a pointer to point to a location in the RAM 203 (step 423). Under the setup operation, the pointer would point to a routine in memory to be executed by the CPU 201 for setting the unit 100.

If the user selects the "BROADCAST STATIONS" option, step 402 is entered and a menu similar to that illustrated in Fig. 4b is displayed. Under this menu, a user can use the cursor key 90 to select any one of the entries corresponding to the preset keys 102. When the cursor key 90 is positioned at the selected entry, the user can then press the SELECT KEY 116. In step 403, the user can set the corresponding preset keys 102 to a selected station by entering the name and frequency of that station.

In step 403, the user can enter a telephone number which will be used for retrieving information from a program information retrieval system wherein programs broadcast from that station is stored. It is contemplated that the telephone number is provided by the television or radio station through publication in newspapers (e.g. the TV/radio section) or the television guides, etc. The telephone number may be the number for the station itself which has its own program information retrieval system, or it may be the number of a central location which keeps schedules and information of broadcast programs of several different stations in a PIRS.

The name, frequency and telephone number entered by the user at step 403 are stored into the non-volatile portion of the RAM 203.

The user can set another preset key 102 or execute the exit option which causes the CPU 201 to re-display the set-up menu of Fig. 4a.

If the user selects the "PUBLICATIONS" option, step 404 is entered and a menu similar to that shown in Fig. 4c is displayed. Under this menu, the user can set any of the preset keys 102 (steps 404 and 405) in a similar way as in steps 402 and 403, with the exception that in step 405, the user is no longer prompted to enter a station frequency. Instead, the name of the publication and a corresponding telephone number for the publication PIRS are entered. The data entered by the user are stored in the RAM 203 in similar a manner as that described in the previous paragraph.

If the user selects the "USER ID" option, step 406 is entered and a menu similar to that shown in Fig. 4d is displayed. Under this menu, the user can optionally enter his name, address and telephone using the alphabet option of the telephone keys 88. The entered data are stored in the RAM 203.

If the user selects the "CLOCK" option, steps 408 and 409 are executed and the CPU 201 prompts the user to enter a new clock value. As setting of the clock is similar to that found in many existing television and VCR remote controls, detail explanation thereof is thus deemed unnecessary.

When the user finishes with the setup operation, the "EXIT" option can be selected from the setup menu of Fig. 4a to terminate the setup. The station frequency and the clock value are again displayed.

A user can tune the unit 100 to any one station and listen to the broadcast using headphones. When a program (including, music, commentary, commercial, etc.) from that station is of interest to the user, the BROADCAST INFO key 112 can then be actuated. Thereupon, step 411 is entered. In step 411, the CPU 201 stores into the non-volatile portion of the RAM 203 an identification of the station, along with the time of the clock at which the BROADCAST INFO key 112 is pressed.

The station can be identified by its broadcast frequency or the name of the station (e.g. using 105.1 to retrieve the name KKGO). Using the station name is considered more advantageous because it is easier for the listener to recognize the station name than recognizing the frequency.

From the identification stored in the RAM 203, the user can retrieve auxiliary information of an identified program. This is performed by connecting the unit 100 to a telephone using a modular connector or an acoustic coupler. When the unit 100 is connected, the user can press the REVIEW KEY 113.

When the REVIEW KEY 113 is actuated, program identifications previously stored in the RAM 203 are retrieved (step 414) and displayed on the display 101 (step 415). There are several formats in which this information can be displayed. For example, the stored identifications may be displayed with the identifications organized by stations. The advantage of this format is that the user can now review the identified programs for one station before the corresponding telephone number is dialed. Another format is to organize the identifications by dates. This format may help the user to more easily find a particular program previously registered.

When the previously identified programs are displayed, the user can use the cursor keys 90 to select the particular program of, or a particular station from, which the user is interested in getting the auxiliary information. When the program or the station is selected, the user can actuate the DIAL KEY 114 and the corresponding telephone number is retrieved (step 416) and dialed (step 417). When telephone connection is established, the CPU 201 retrieves the station identification from the RAM 203 and activates DTMF generator and decoder circuit 209. DTMF tones are then generated to send the program identification(s) to the PIRS of the station or central location (step 418). After the program identification is sent, the CPU 201 waits for the PIRS to transmit the information back (step 419).

In step 418, a user identification, which was entered previously under the USER ID option, may optionally be sent to the PIRS. The user identification may be a name, address and telephone number as described previously, or it may simply be a number such as his social security number. Transmitting the user identification has the advantage that it allows the PIRS to send bulky written information through mail or by direct telephone call.

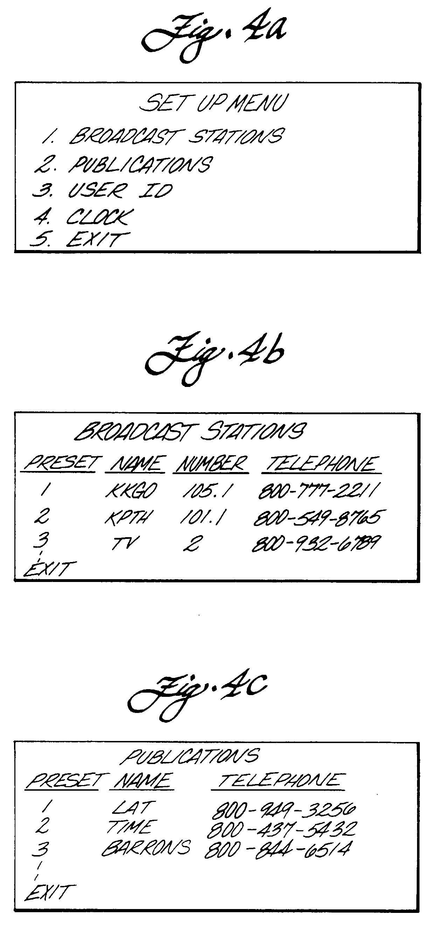

Fig. 5 is a flow chart illustrating the steps of the PIRS when a request is received.

Upon receiving a request (step 501), the PIRS uses the station ID from the program identification to locate data for that station (step 503). (However, if the PIRS is an in-house system of a station, step 503 may not be needed.)

In step 504, the clock value from the program identification is decoded to search the identified program. When the identified program is found, the PIRS retrieves auxiliary information (step 505) thereof.

Advantageously, the PIRS makes a record of the request. This record can then be used to provide statistical data for determining the popularity of the program, the station or other audience monitoring type data (step 506).

The PIRS sends the auxiliary information to the user by first sending a DTMF tone to unit 100 (step 507). The DTMF tone is received by the DTMF generator and decoder circuit 209 of the unit 100, which then interrupts the CPU 201. The CPU 201, upon interrupted by circuit 209, starts the tape recorder through control of the circuit 210. When the tape recorder is started, a signal is sent to the PIRS to initiate transmission of the auxiliary information (step 508). When the auxiliary information from the PIRS is received by the unit 100, it is stored on the tape.

If the auxiliary information relates to a musical selection, it might include the album, artist and title along with a short (e.g. 10 second) audio segment of the selection so that the user can relate the melody to the title. This concept is disclosed in my U.S. Patent No. 5,119,507. If the auxiliary information relates to an advertisement, a portion of the ad may be repeated along with the auxiliary information to relate the product or service to the additional information.

At completion of the transmission, the PIRS generates a DTMF tone to the unit 100 to stop the tape recorder and terminate the telephone connection (step 509). A signal can also be generated at the unit 100 so that the user is alerted to the completion and availability of the auxiliary information.

Referring back to the flow charts of Figs. 3a-3b, if the user at any point during the retrieval of the auxiliary information decides to cancel the operation. the Hang Up key 119 can be actuated, and the telephone connection is cut (step 421).

When the program identifications are displayed upon actuation of the REVIEW KEY 113, a user may select to cancel a previously stored program identification from the RAM 203. This may be done by first using the cursor keys 90 to select the program identification the user wishes to cancel. Once the program identification is selected, the CANCEL KEY 118 can be actuated and the data corresponding to the selected program identification is thereby erased from the RAM 203 (step 420).

When the transmission is completed, the user can either hear the information directly from the tape recorder, or, optionally, the signals stored on the tape may be interpreted by the CPU 201 to produce text data which can then be displayed on the display 101.

Although the above is described with reference to identifying a radio to program, the invention is not so limited. As described above, during setup of the unit 100, a user can also program the preset keys to store names of different publications (such as the Los Angeles Times®, Newsweek®, Barrons®, etc.), along with a corresponding telephone number for each publication. When reading an article, the user can press the corresponding preset key 102. When the user reads an article or an advertizement of interest, the PRINT INFO key 115 can he actuated to store the name of the publication into the RAM 203 (step 424). The CPU 201 then prompts the user for a code number such as an I PLUS number (step 425), which may be found printed in the article or the advertizement. The user enters the I PLUS number through the telephone keys 88, which is then stored into the RAM 203 (step 426).

To retrieve information on the identified article or advertizement, the user connects the unit 100 to a telephone. The REVIEW KEY 113 can be actuated to display the identification and then the DIAL KEY 114 to connection the unit to the PIRS as described above. The information is then retrieved through the telephone connection as disclosed previously.

In the above described embodiment, the identification of a broadcast program is recorded as a number so that it is sent over the DTMF tone. However, if unit 100 has a modem, more detail program identification can be entered and sent to a PIRS, and a PIRS can send text information to unit 100. Moreover, if unit 100 has a modem, the transmitted information need not be stored on the tape. but directly in the RAM 203 which can then be displayed at display 101.

As an option, the unit 100 can be implemented to have keys commonly found in a calculator, as shown in Fig. 1. The CPU 201 can then be implemented to be able to perform mathematics so that the unit 100 can be used as a calculator.

A user need not be listening to the unit 100 in practice, but can be listening to any radio or television (including a car radio), with the unit 100 set to the same tuned station. Then, if there is program of interest, the BROADCAST INFO key 112 can be actuated to identify the program.

Preferably, the clock 206 is set to correspond to the local time. If an audible DTMF tone can be broadcast by a local station on the hour a few times each day, a user can synchronize the unit 100 using its internal radio circuit or from another radio, using the microphone of the tape recorder to detect the audible tone and reset the clock to the hour.

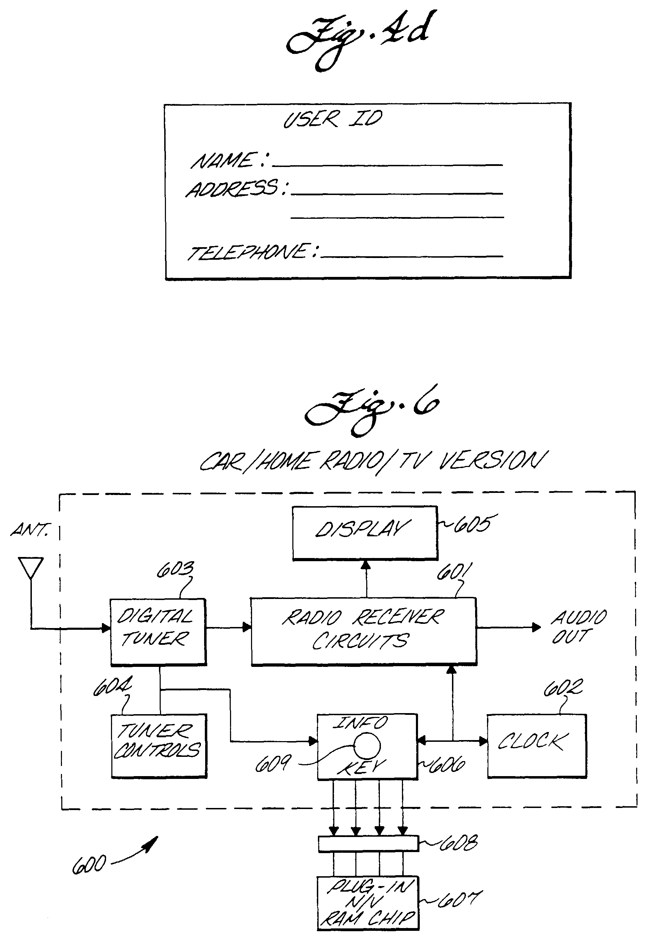

Fig. 6 is a block diagram of a receiver used in connection with another embodiment of the present invention. This embodiment is a receiver 600 which is a modification of a common radio or television. The receiver 600 comprises a radio receiver circuit 601, a digital tuner 603 and a tuner control circuit 604 all of which can be found in standard radio to or television sets. As in many common units, the receiver 600 may have a clock 602. If a clock is not present, one can be built easily. Preferably, the clock 502 measures and indicates date in addition to hour, minute and second.

The receiver 600 has a circuit 606 coupled to the digital tuner 604 and the clock 602. This circuit 606 has means 608. such as a socket for receiving a non-volatile memory 607 such as a EEPROM, or a magnetic strip recorder receiving a card with a magnetic strip.

The circuit 606 is activated when a "BROADCAST INFO" key 609 is actuated. When activated, the circuit 606 operates to store an identification of the tuned station (e.g. its frequency from the digital tuner 604) to the memory 607, along with the value of the clock 602 at the time the key 609 is actuated.

Since the memory 607 may be used separately (i.e. in different receivers), it becomes necessary to have a memory management scheme so that the circuit 606 can know where to write new data thereon each time. One such memory management scheme is to maintain a pointer in the memory 607. The pointer is kept at a predefined location, such as the first address. It points to a location in the memory for inputting the next data. When the memory 607 is inserted into the socket 608, the pointer is read by the circuit 606.

When a user hears a program of interest, the BROADCAST INFO key 609 can be actuated, which causes the station identification and the clock to be stored into the memory 607. Optionally, a user identification, which may be preset into the receiver 600, is also stored for purposes described above.

The user can retrieve information of the broadcast program by removing the memory 607 from the socket 608 and inserting it in a retrieval device (hereinafter called an Automatic Information Machine).

It is contemplated for this embodiment that a plurality of these Automatic Information Machines (AIMs) will be installed in different locations, such as in record stores and other retail establishments.

In the AIM, the time and station of the broadcast program is retrieved from the memory 607. From such identification, information such as the title (and/or other information, such as the singer) of a song is output in print form. With this information, the user can, for example, either purchase a record of the song, or other records by the same singer.

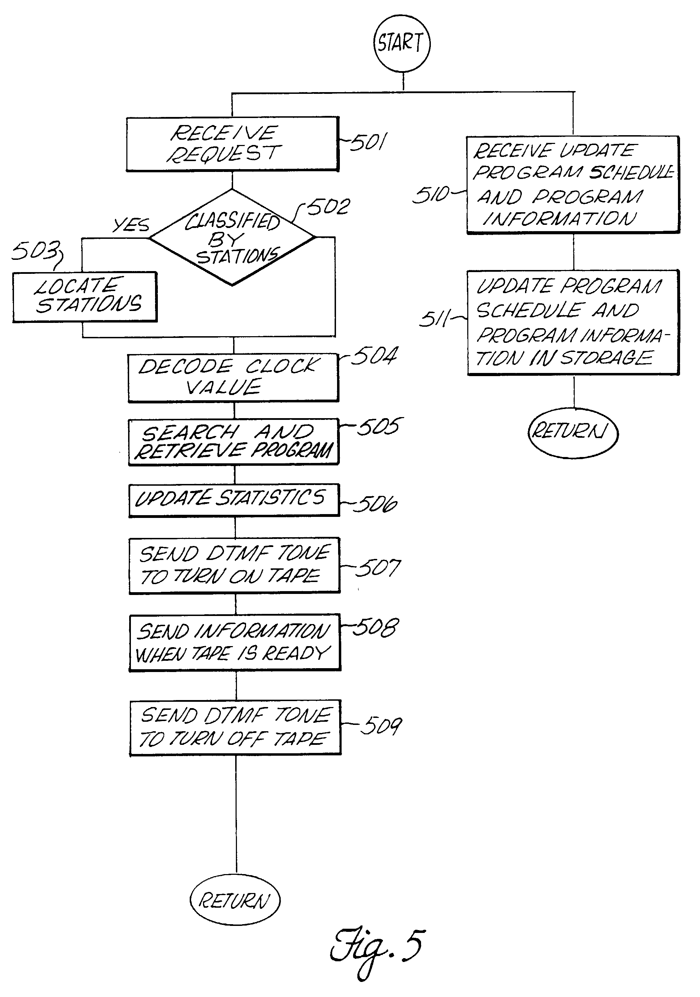

Fig. 7 is a block diagram illustrating a design of an AIM 700. The AIM 700 is controlled by a central processing unit (CPU) 701. Its operation is performed through execution by the CPU 701 of operating software stored in a read only memory (ROM) 702. The AIM 700 also has a clock 713 and memories (such as an audio tape drive 703, a disk 704 or semiconductor memory 705) for storing schedules of broadcast programs of AM, FM and TV stations. Means are provided in the AIM 700 so that the schedules and auxiliary information stored in the tape 703, the disk 704 or semiconductor memory 705 can be updated periodically. The updating means may be a floppy drive 706 and/or a modem 707 coupled to a telephone line which is in turn coupled to an information provider.

A display 708, a printer 710, and headphones 712 coupled to audio circuitry 711 are provided to facilitate communication with a user.

The CPU 701 is coupled to a socket 709 where the memory 607 from a user can be inserted.

In operation, upon registering the programs of interest into the memory 607 as described above, a user can insert it into the socket 709 of the AIM 700. The CPU 701 reads the identification (channel, date and time) of the program from the memory 607 and uses this identification to search its memory, 703, 704 or 705 for information relating to the identified program. The information may include, for example, the title of a song, author or singer, price of record or album for the song, etc. It may also be the program itself or a program related to the identified program.

The information can be stored in an AIM 700 in different formats. For example, if the information to be provided is for identifying an album of a song, then the information may simply be a standard UCC product identification bar code number which most record stores have been using to monitor their inventory. This UCC number can be incorporated as part of the information stored in the AIMs in the form of a broadcast station program schedule for a particular day as follows:
Station Frequency (e.g. FM 98.7)
Date (e.g. 11/9/1991)
Start Time (e.g. 13:01:03)
   - End Time (e.g. 13:05:06) UCC number/Track
Start Time (e.g. 13:05:06)
   - End Time (e.g. 13:08:18) UCC number/Track
Start Time (e.g. 13:08:18)
   - End Time (e.g. 13:08:48) station commentary

To further illustrate operation of the AIM, assuming a user was listening to FM 99.9. and at 1:05 pm on November 9, 1991. The "BROADCAST INFO" key is actuated because a song of interest was heard on that station. At that time, the frequency (i.e. FM 99.9) of the station, along with the time at which the key was activated, would be stored in the non-volatile memory 607. When the non-volatile memory 607 is later inserted into a AIM 700 (which is located, for example, in a record store), the channel, date and time data ("CDT") are then used by the AIM 700 to locate the UCC number and track of the song.

From the UCC number and the track number, the user can retrieve other auxiliary information regarding the song, including the store stock level and the price of the album.

The retrieved information can be displayed on the display, printed out on the printer, and/or provided to the user in audio from the tape 703 drive via the headphones 712.

If an AIM does not have information concerning an identified program (such as when the AIM belongs to a record store and an identified program is for a commercial of a automobile), an error message is displayed or printed so that the user is advised to take the memory to the right AIM.

After the information is retrieved, the AIM may give an option to the user to erase the corresponding identification from the memory 607.

Although the invention has been described above with reference to a radio, its application is not so limited. For example, instead of identifying radio programs, a device used in connection with the present invention can be used to identify a television program. Moreover, an alternate embodiment may be implemented to allow a user to retrieve the program itself or an associate program. For example, the user may want to listen to the identified program again (such as a comedy or a commentary). In this case, the CPU 701 uses the program identification to retrieve a copy of the program and replays it on the audio circuit 711, so that the user can listen to it at the earphones 712. Alternatively, a user may want to watch a television again. In that case, the CPU 701 uses the program identification to retrieve a copy of the program and replays it on the display 708. Another important feature of the AIM 700 is that it stores the information retrieved from the user's RAM chip memory 607, and furnishes that information to the information provided. This information yields valuable audience monitoring data concerning the popularity of various broadcast stations, musical selections and advertisements. The user information may be stored on the hard disk 704, and periodically provided to the information provided via the floppy drive/disk 706 on the telephone line/modem 707.

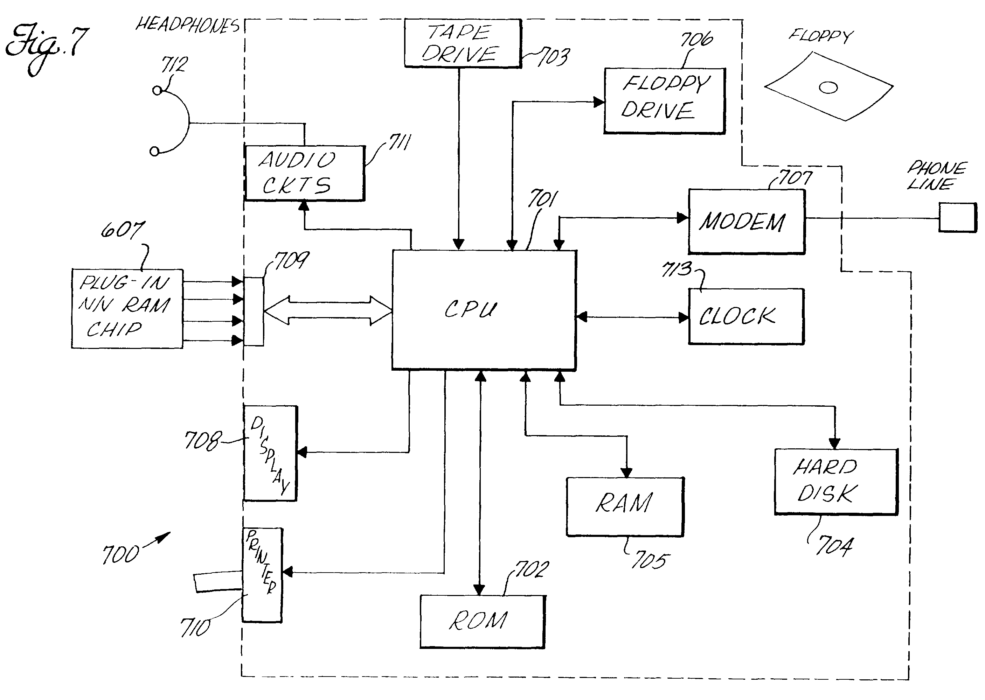

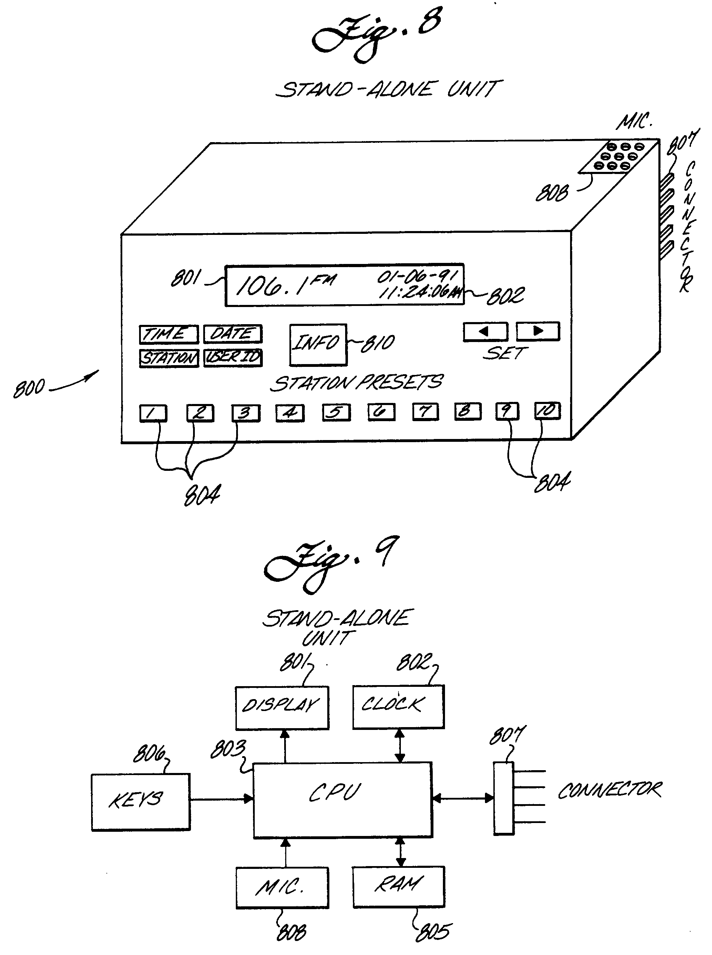

Another alternate embodiment of a unit used in connection with the present invention is shown in Fig. 8. This unit 800 has the advantage that it can be used with all existing receivers without modification thereto. Fig. 9 is a schematic block diagram illustrating an internal design of the unit 800.

With reference to both Figs 8 and 9, the unit 800 comprises a battery powered pocket size digital clock 802 having an LCD display 801. The clock 802 is implemented using TIME and DATE keys so that it measures day as well as hour, minute and, optionally, second. A set of station preset keys 804 are provided to allow a user to set the unit 800 to a plurality of preferred frequencies using the STATION and SET keys.

Within the unit 800 is a central processing unit (CPU) 803 which controls operation theretof, and a memory 805, such as a random access memory (RAM) which is used for storing program identifications.

The unit 800 does not need to have a radio receiver circuit. When actuated, it merely operates to store the station frequencies and the value of the clock.

Optionally, provisions are made to let a user enter his user identification such as a social security number using the USER ID and STATION PRESET keys.

The unit 800 also includes a plug 807 for interfacing to an AIM, as described above. In operation, a user sets the unit 800 to the station being listened to, either by the preset keys or manually. When the user hears a program of interest and desires to obtain information for the program, the INFO key 810 can be actuated. This action causes the value of the clock 802, as well as the station identification to be stored in the memory 805. These information can then be used to retrieve information from an AIM in the same manner as described above.

Optionally, the unit 800 has a circuit for reading the clock 713 when it is connected to an AIM. In this way, the clock 802 can be synchronized by the AIM. Alternatively, the unit 800 may have a microphone 808 whereby the clock 802 can be synchronized through audio time tones broadcast by an external radio.

In the same way as described above, the unit 800 may be equipped with means for storing identifications of different publications and I PLUS codes to retrieve information relating to a published article or advertisement.

While the invention has been described with reference to a preferred embodiment, it will be understood that additions, modifications and adaptations can be made without substantially diverging from the scope of this invention, which is defined in the claims set forth below.

## Claims

1. A method for supplying auxiliary information about broadcast programs to a user of a receiving unit comprising at least a broadcast receiver comprising the steps of:
playing programs from a schedule of broadcast programs at the broadcast receiver (100; 600);
mapping SDT data representative of the station, day, and time of the respective programs of the schedule to auxiliary information about the respective programs in a memory (703, 704, 705) at a central location (700) remote from the receiver (100; 600);
storing (413) at the receiving unit (100; 600; 800) SDT data for a particular program selected by the user from among the programs being played at the receiver (100; 600);
conveying (418) the stored SDT data at the user's initiative to the central location (700);
retrieving (505) at the central location (700) the auxiliary information corresponding to the conveyed SDT data; and
conveying (508) the retrieved auxiliary information to the user.

2. The method of claim 1, in which the second conveying step conveys the retrieved auxiliary information electronically (508), the method additionally comprising the step of reproducing the retrieved auxiliary information at the broadcast receiver (100).

3. The method of claim 1, in which the second conveying step conveys the retrieved auxiliary information in print form.

4. The method of claim 1, in which both conveying steps comprise establishing (417; 507) a telephone connection between the broadcast receiver (100) and the central location and transmitting (418; 508) the SDT data and the retrieved auxiliary information over the telephone connection.

5. The method of claim 4, in which the SDT data and the retrieved auxiliary information are transmitted (418; 508) in a modem protocol.

6. The method of claim 1, in which the storing step stores the SDT data in a nonvolatile memory (607; 805) and the SDT data conveying step comprises physically carrying the memory (607; 805) to the central location (700).

7. The method of claim 1, in which the user is located at the receiver (100) and the second conveying step comprises conveying (508) the retrieved auxiliary information to the broadcast receiver (100).

8. The method of claim 1, in which storing the SDT data at the receiving unit comprises storing the SDT data at the broadcast receiver (100; 600).

9. The method of claim 1, in which storing the SDT data at the receiving unit comprises storing the SDT data at a stand alone unit (800) of the receiving unit.

## Patentansprüche

1. Verfahren zum Bereitstellen von Zusatzinformationen zu ausgestrahlten Programmen an einen Nutzer einer Empfangseinheit, die mindestens einen Rundfunk- oder Fernsehempfänger aufweist, mit den Schritten:
Spielen von Programmen aus einem Verzeichnis von ausgestrahlten Programmen an dem Empfänger (100; 600);
Zuordnen von STZ-Daten, die die Sendestation, den Tag und die Zeit des jeweiligen Programms des Verzeichnisses repräsentieren, zu Zusatzinformationen zu den jeweiligen Programmen in einem Speicher (703, 704, 705) an einer zentralen Stelle (700), die sich entfernt von dem Empfänger (100; 600) befindet;
Speichern (413) der STZ-Daten für ein bestimmtes Programm, das vom Nutzer aus den am Empfänger (100; 600) gespielten Programmen ausgewählt wird, an der Empfangseinheit (100; 600; 800);
Übertragen (418) der gespeicherten STZ-Daten auf Initiative des Nutzers hin an die zentrale Stelle (700);
Auffinden (505) der Zusatzinformationen, die den übertragenen STZ-Daten entsprechen, an der zentralen Stelle (700) und
Übertragen (508) der aufgefundenen Zusatzinformationen an den Nutzer.

2. Verfahren nach Anspruch 1, bei dem im zweiten Übertragungsschritt die aufgefundenen Zusatzinformationen elektronisch (508) übertragen werden, wobei das Verfahren zusätzlich den Schritt aufweist, daß die aufgefundenen Zusatzinformationen am Empfänger (100) wiedergegeben werden.

3. Verfahren nach Anspruch 1, bei dem im zweiten Übertragungsschritt die aufgefundenen Zusatzinformationen in Druckform übertragen werden.

4. Verfahren nach Anspruch 1, bei dem beide Übertragungsschritte den Aufbau (417; 507) einer Telefonverbindung zwischen dem Empfänger (100) und der zentralen Stelle und ein Übertragen (418; 508) der STZ-Daten und der aufgefundenen Zusatzinformationen über die Telefonverbindung umfassen.

5. Verfahren nach Anspruch 4, bei dem die STZ-Daten und die aufgefundenen Zusatzinformationen in einem Modemprotokoll übertragen (418; 508) werden.

6. Verfahren nach Anspruch 1, bei dem bei dem Speicherschritt die STZ-Daten in einem nichtflüchtigen Speicher (607; 805) gespeichert werden und bei dem der Schritt des Übertragens der STZ-Daten ein körperliches Tragen des Speichers (607; 805) zu der zentralen Stelle (700) umfaßt.

7. Verfahren nach Anspruch 1, bei dem der Nutzer sich an dem Empfänger (100) befindet und der zweite Übertragungsschritt ein Übertragen der aufgefundenen Zusatzinformationen an den Empfänger (100) umfaßt.

8. Verfahren nach Anspruch 1, bei dem das Speichern der STZ-Daten an der Empfangseinheit ein Speichern der STZ-Daten an dem Empfänger (100; 600) umfaßt.

9. Verfahren nach Anspruch 1, bei dem das Speichern der STZ-Daten an der Empfangseinheit ein Speichern der STZ-Daten an einer gesonderten Einheit (800) der Empfangseinheit umfaßt.

## Revendications

1. Un procédé pour fournir une information auxiliaire concernant des programmes diffusés à un utilisateur d'une unité de réception qui comprend au moins un récepteur de diffusion, comprenant les étapes suivantes :
on présente au récepteur de diffusion (100; 600) des émissions faisant partie d'un programme d'émissions diffusées;
on place des données SDT représentatives de la station, du jour et de l'heure des émissions respectives du programme, dans une information auxiliaire concernant les émissions respectives, dans une mémoire (703, 704, 705) à un emplacement central (700) éloigné du récepteur (100; 600);
on enregistre (413) à l'unité de réception (100; 600; 800) des données SDT d'une émission particulière qui est sélectionnée par l'utilisateur parmi les émissions qui sont présentées au récepteur (100; 600);
on transfère (418) les données SDT enregistrées, à l'initiative de l'utilisateur, vers l'emplacement central (700);
on extrait (505) à l'emplacement central (700) l'information auxiliaire correspondant aux données SDT transférées; et
on transfère (508) vers l'utilisateur l'information auxiliaire qui a été extraite.

2. Le procédé de la revendication 1, dans lequel la seconde étape de transfert transfère de façon électronique (508) l'information auxiliaire extraite, le procédé comprenant en outre l'étape de reproduction, au récepteur de diffusion (100), de l'information auxiliaire extraite.

3. Le procédé de la revendication 1, dans lequel la seconde étape de transfert transfère sous forme imprimée l'information auxiliaire extraite.

4. Le procédé de la revendication 1, dans lequel les deux étapes de transfert comprennent l'établissement (417; 507) d'une connexion téléphonique entre le récepteur de diffusion (100) et l'emplacement central, et la transmission (418; 508) des données SDT et de l'information auxiliaire extraite, par la connexion téléphonique.

5. Le procédé de la revendication 4, dans lequel les données SDT et l'information auxiliaire extraite sont transmises (418; 508) avec un protocole de modem.

6. Le procédé de la revendication 1, dans lequel l'étape d'enregistrement enregistre les données SDT dans une mémoire non volatile (607; 805) et l'étape de transfert des données SDT comprend le transport physique de la mémoire (607; 805) jusqu'à l'emplacement central (700).

7. Le procédé de la revendication 1, dans lequel l'utilisateur se trouve au récepteur (100) et la seconde étape de transfert comprend le transfert (508) vers le récepteur de diffusion (100) de l'information auxiliaire extraite.

8. Le procédé de la revendication 1, dans lequel l'enregistrement des données SDT à l'unité de réception comprend l'enregistrement des données SDT au récepteur de diffusion (100; 600).

9. Le procédé de la revendication 1, dans lequel l'enregistrement des données SDT à l'unité de réception comprend l'enregistrement des données SDT dans une unité autonome (800) de l'unité de réception.
